# EUROPEAN PATENT APPLICATION

(11) **EP 2 876 591 A1**
(43) Date of publication of application: **27.05.2015**
(21) Application number: 14194456.1
(22) Date of filing: 24.11.2014
(51) Int. Cl.: G06Q 10/10

(54) **Method and apparatus for establishing a social relationship in a social service providing system**

(30) Priority: 22.11.2013 KR 20130142662
(71) Applicant: Samsung Electronics Co., Ltd, Gyeonggi-do 443-742 (KR)
(72) Inventor: Oh, Gyu-Bong, Gyeonggi-do (KR); Lee, Kyung-Tak, Gyeonggi-do (KR); Choi, Jong-Soo, Gyeonggi-do (KR)
(74) Representative: Nederlandsch Octrooibureau

(57) **Abstract**

A method of a server and an apparatus for establishing a social relationship between participants in a communication system providing an Immersive Social Centre (ISC) service are provided. The method includes generating information about a contacts group for at least two participants of a social service chat or session and a social relationship of the participants; notifying the generated information to at least one of the participants; and sending a social relationship setting request to at least one other participant of the at least two participants excluding the at least one of the participants notified of the generated information.

## Description

### BACKGROUND OF THE INVENTION

### 1. Field of the Invention

The present invention relates generally to a social network service.

### 2. Description of the Related Art

Recently, the number of services based on social networks has been sharply increasing. A social network is a network made up of a user and other users related to the user's interests or activities. Services using social networks have been rapidly spreading in order to satisfy a desire for individual expression, to share information with other users, and to establish connections with other users.

### SUMMARY OF THE INVENTION

The present invention has been made to provide at least advantages described below. An aspect of the present invention provides a method and an apparatus for providing an Immersive Social Centre (ISC) service to a user in a communication system.

Another aspect of the present invention provides a method and an apparatus for establishing a social relationship between an ISC user and a participant based on a session context relating to a participation session in a communication system providing an ISC service.

Yet another aspect of the present invention provides a method and an apparatus for allowing an ISC service more easily and rapidly according to a user's selection.

According to an aspect of the present invention, an operating method of a server in a communication system for providing a social service is provided. The method includes generating information about a contacts group for at least two participants of a social service chat or session and a social relationship of the participants; notifying the generated information to at least one of the participants; and sending a social relationship setting request to at least one other participant of the at least two participants excluding the at least one of the participants notified of the generated information.

According to yet another aspect of the present invention, an apparatus of a server in a communication system for providing a social service is provided. The apparatus includes an Immersive Social Centre (ISC) server configured to generate information about a contacts group for at least two participants of a social service chat or session, and a social relationship of the participants, and notify the generated information to at least one of the participants; and a document management server configured to send a social relationship setting request to at least one other participant of the at least two participants excluding the at least one of the participants notified of the generated information.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a diagram illustrating a conceptual structure of a system for providing an Immersive Social Centre (ISC) service according to an exemplary embodiment of the present invention;
FIG. 2 is a diagram illustrating a method for establishing a social relationship according to an embodiment of the present invention;
FIG. 3 is a diagram illustrating a method for establishing the social relationship according to another embodiment of the present invention;
FIGs. 4A and 4B are diagrams illustrating the social relationship setting according to an embodiment of the present invention;
FIG. 5 is a diagram illustrating a detailed process for establishing the social relationship according to an embodiment of the present invention;
FIG. 6 is a diagram illustrating an ISC user preference document according to an embodiment of the present invention;
FIG. 7 is a diagram illustrating a contacts group for a session participant according to an embodiment of the present invention;
FIG. 8 is a diagram illustrating a social relationship setting request according to an embodiment of the present invention;
FIGs. 9A and 9B are diagrams illustrating a detailed process for establishing the social relationship according to yet another embodiment of the present invention;
FIG. 10 is a diagram illustrating a request handler document for status management of the social relationship setting request according to an embodiment of the present invention;
FIG. 11 is a diagram illustrating a detailed process for establishing the social relationship according to still another embodiment of the present invention;
FIG. 12 is a diagram illustrating an ISC server for establishing the social relationship according to an embodiment of the present invention; and
FIG. 13 is a diagram illustrating an ISC device for establishing the social relationship according to an embodiment of the present invention.

Throughout the drawings, like reference numerals will be understood to refer to like parts, components and structures.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals. Detailed descriptions of constructions or processes known in the art may be omitted to avoid obscuring the subject matter of the present invention.

The terms and words used in the following description and claims are not limited to their dictionary meanings, but, are merely used to enable a clear and consistent understanding of the invention. Accordingly, the following description of embodiments of the present invention is provided for illustration purposes.

The singular forms "a," "an," and "the" include plural referents unless the context clearly dictates otherwise. Thus, for example, reference to "a component surface" includes reference to one or more of such surfaces.

Embodiments of the present invention provide an Immersive Social Centre (ISC) service being an advanced immersive communication service by converging media content viewing and communication experience between users, and a method for establishing a social relationship of a user based on context relating to the communication of the user and a content viewing session. Hence, the user can utilize better social user experience major functions. The ISC service is a service for providing the immersive experience by converging the content viewing and the user communication.

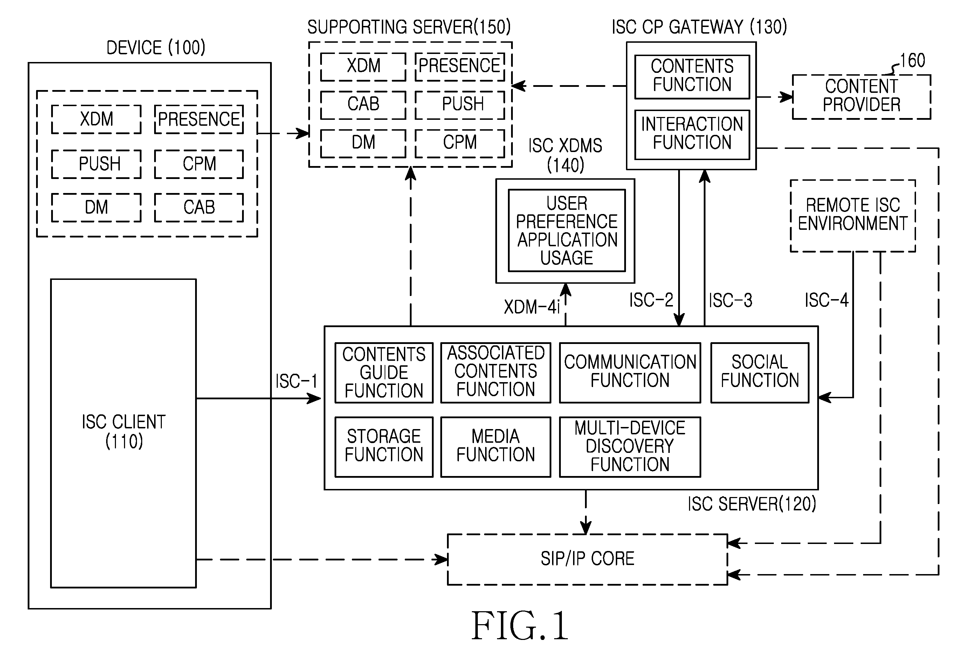

FIG. 1 is a diagram illustrating a conceptual structure of a system for providing the ISC service according to an embodiment of the present invention.

Referring to FIG. 1, a system for providing the ISC service according to an embodiment of the present invention includes an ISC client 110, an ISC server 120, an ISC Content Provider (CP) gateway 130, an ISC extensible Markup Language (XML) Document Management Server (XDMS) 140, and a supporting server 150.

The ISC client 110 resides in a device 100 and communicates with the ISC server 120. The ISC client 110 is capable of communication with the other entities (e.g., the ISC server 120, the ISC CP gateway 130, and a remote ISC environment) directly or via a Session Initiation Protocol (SIP)/Internet Protocol (IP) core.

The ISC client 110 sends, to the ISC server 120, a request for, e.g., ISC client 100 and ISC user registration, communications (e.g., chat messages/file delivery) of ISC users, function (e.g., add/delete a viewing participant) of a content viewing group (i.e., a group viewing contents together), content viewing synchronization, user device capability discovery, content viewing information management, media content reception/management, content list (e.g., line/non-live contents, user-generated contents, content preview) management, associated content management, immersive experience related function (e.g., spatial configuration, continuous content view), and media communication (e.g., media plane communication). The ISC client 110 sends, to the supporting server 150, XML document management of the ISC device, presence information management, push message management, converged IP messaging management, device management, and converged address book management.

The ISC server 120 is one of the network components for the ISC service. The ISC server 120 receives a request of the ISC user from the ISC client 110 and processes the request. Main functions of the ISC server 120 include registration/mutual authentication of the ISC client 110, content guide generation, primary content and associated content binding and delivery, content storage and management, multiple devices handling, content viewing session and communication session handling, contents distribution, social interaction, and immersive experience delivery.

The ISC CP gateway 130 enables real-time and/or non-real-time communication between the ISC user and a content provider. The ISC CP gateway 130 receives media contents for the content viewing or the continuous content viewing of the ISC client 110 from the content provider, and forwards the media contents to the ISC server 120. The ISC CP gateway 130 converts a message from the content provider 160 to an SIP message transported in the ISC system.

The ISC XDMS 140 manages ISC user preference application usage. For example, the ISC XDMS 140 stores ISC user preference information relating to social relationship settings of the communication session, communication history storage and sharing, and intention delivery. The ISC XDMS 140 provides the ISC user preference information according to a request of the ISC server 120.

Functions of the supporting server 150 include XML Document Management (XDM) for accessing various application usage functions besides the preference, Presence (PRS) for presence information management, PUSH for push message management, Converged IP Messaging (CPM) for the converged messaging management, Device Management (DM), and Converged Address Book (CAB). That is, the supporting server 150 can store contents such as messages and files transported between the users in the communication session.

A method for establishing the social relationship of the ISC user based on the session context relating to the participation session that provides the user with improved ISC functions according to embodiments of the present invention is described as follows.

An embodiment of the present invention provides a method and a system for sending and receiving data for a rapid communication service without wasting resources, power, and memory in a communication system supporting various communication services.

Another embodiment of the present invention provides a method and a system for sending and receiving data to a user for an ISC service in a communication system.

Yet another embodiment of the present invention provides a method and an apparatus for establishing a social relationship between an ISC user and a participant based on a session context relating to a participation session in an ISC service system so as to provide the easy and rapid ISC service according to a user's intention selection.

As such, when the ISC user wants to establish the social relationship with participants of his/her session, the ISC server 120 of FIG. 1 stores their contacts group and social relationship in the ISC XDMS 140 based on the session context according to the user preference, and notifies an intent to establish the social relationship to the ISC device 100 as an ISC client. The user of the ISC device 100 can selectively store the contacts group. Next, the corresponding ISC server identifies the user preference about the social relationship setting with the other participants, and establishes the social relationship between the ISC users by sending a social relationship request to the corresponding participants. Hence, the main functions of the better social user experience can be provided to the user.

Certain embodiments of the present invention described herein operate based on following premises:
1) The ISC user predefines the ISC user preference for setting up the social relationship;
2) The ISC user predefines the user preference for storing the social service session (e.g., conversation) history;
3) The ISC user requests to subscribe in advance to a contacts group document including the generated social relationship; and
4) The ISC client understands an XML schema in the ISC XDMS.

The context-based social relationship setting can include establishing the social relationship after the session ends, and establishing the social relationship during the session. The context-based social relationship setting can include establishing the social relationship by a user direct request, and establishing the social relationship by the ISC server.

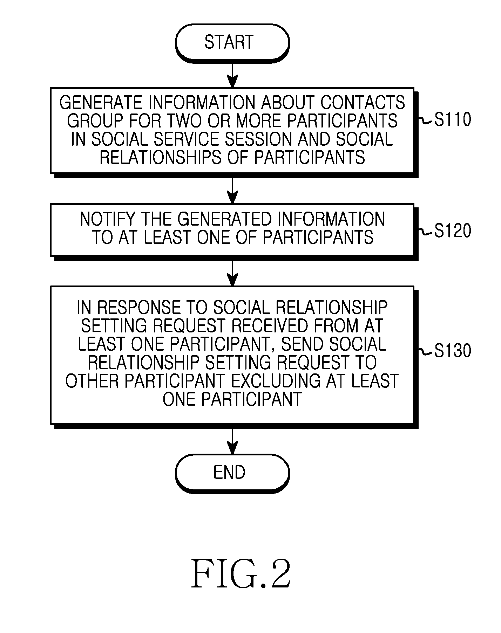

FIG. 2 is a diagram illustrating a method for establishing the social relationship performed by a server apparatus according to an embodiment of the present invention. In the following description with reference to FIG. 2, the server apparatus includes the ISC server 120, the ISC XDMS 140, and the supporting server 150 of FIG. 1.

Referring to FIG. 2, the server apparatus generates information about the contacts group for at least two participants involved in the social service session and the social relationships of the participants, in step S110. In step S120, the server apparatus notifies at least one of the participants of the generated information. In step S130, in response to a social relationship setting request received from at least one participant, the server apparatus sends the social relationship setting request to other participants except for the at least one participant from which the social relationship setting request is received.

According to an embodiment of the present invention, the information can be generated after the social service session ends. Alternatively, the information can be generated in response to a request from the at least one participant during the social service session.

According to an embodiment of the present invention, generating the information can include generating the information about the contacts group of the participants and the social relationship of the participants based on preference of preset participants.

According to an embodiment of the present invention, the information can include at least one of a list of the contacts group, a name of the contacts group, a Uniform Resource Identifier (URI) of the session, a session generation date, and a participant of the session.

According to an embodiment of the present invention, the social relationship setting request sent can include at least one of a recipient list, a social relationship setting invitation, a social relationship invitation from a sender to the recipient, a result reception request for the social relationship setting request, an identifier of the social relationship setting request, sender information for the social relationship setting request, notification information for the social relationship setting request, and profile information of the sender for the social relationship setting request.

According to an embodiment of the present invention, the other participant can belong to a server of the same domain as the at least one participant. Alternatively, the other participant can belong to a server of a different domain from the at least one participant.

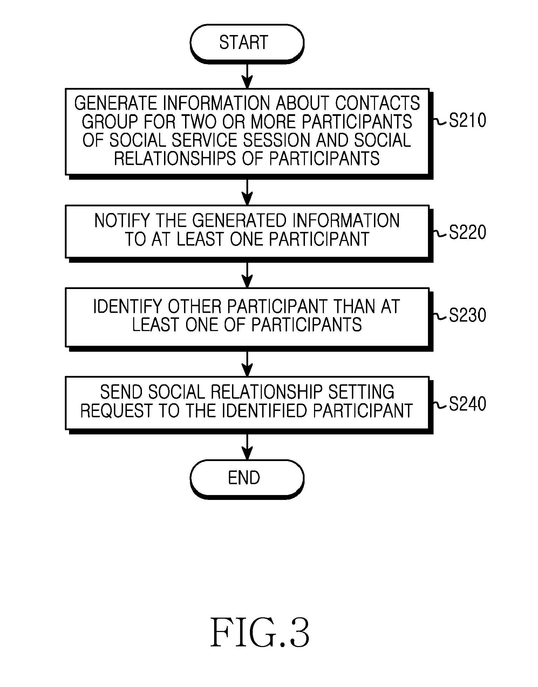

FIG. 3 is a diagram illustrating a method for establishing the social relationship performed by a server apparatus according to another embodiment of the present invention. In the following description with reference to FIG. 3, the server apparatus includes the ISC server 120, the ISC XDMS 140, and the supporting server 150 of FIG. 1.

Referring to FIG. 3, in step S210, the server apparatus generates the information about the contacts group of at least two participants involved in the ISC session and the social relationships of the participants. In step S220, the server apparatus notifies at least one of the participants of the generated information. That is, the server apparatus provides the at least one of the participants with the generated information. In step S230, the server apparatus identifies at least one participant other than the at least one of participant notified of the generated information. In step S240, the server apparatus sends the social relationship setting request to the identified participant.

According to an embodiment of the present invention, the information can be generated after the social service session ends. Alternatively, the information can be generated in response to a request from the at least one participant during the social service session.

According to an embodiment of the present invention, generating the information can include generating the information about the contacts group of the participants and the social relationship of the participants based on preference of preset participants.

According to an embodiment of the present invention, the information can include at least one of a list of the contacts group, a name of the contacts group, a Uniform Resource Identifier (URI) of the session, a session generation date, and a participant of the session.

According to an embodiment of the present invention, identifying the other participant can include identifying the other participant to send the generated information, based on preference of preset participants. The operating method can further include, after identifying the other participant, updating a request handler document for managing a status of the social relationship request. The request handler document can include at least one of a social service related request, a social relationship setting request, a recipient list, a social relationship setting invitation, a social relationship invitation from a sender to the recipient, a result reception request for the social relationship setting request, a response status of the recipient for the social relationship setting request, an identifier of the social relationship setting request, sender information for the social relationship setting request, notification information for the social relationship setting request, and profile information of the sender for the social relationship setting request.

According to an embodiment of the present invention, the social relationship setting request sent can include at least one of a recipient list, a social relationship setting invitation, a social relationship invitation from a sender to the recipient, a result reception request for the social relationship setting request, an identifier of the social relationship setting request, sender information for the social relationship setting request, notification information for the social relationship setting request, and profile information of the sender for the social relationship setting request.

According to an embodiment of the present invention, the other participant can belong to a server of the same domain as the at least one participant. Alternatively, the other participant can belong to a server of a different domain from the at least one participant.

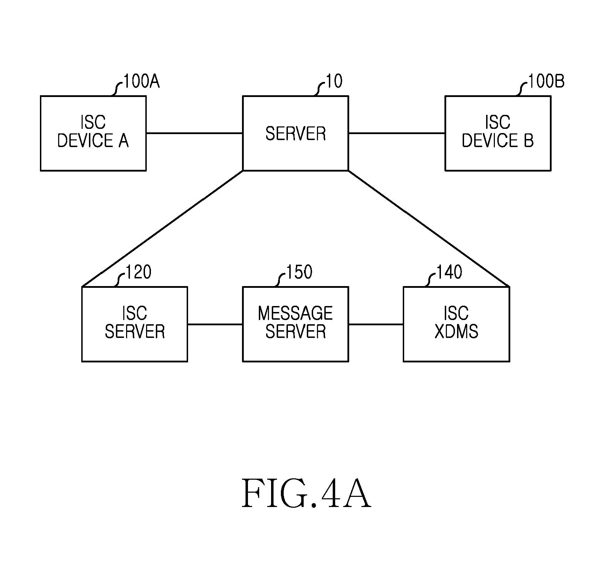

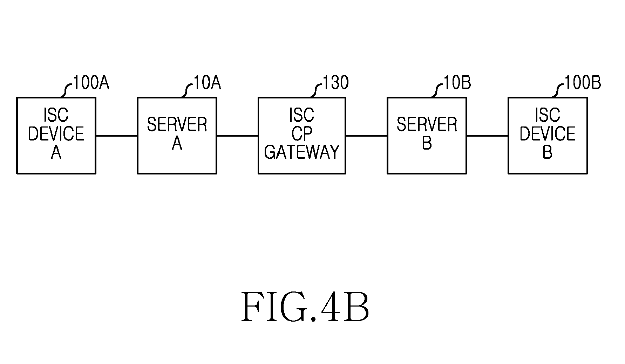

FIGs. 4A and 4B are diagrams illustrating social relationship settings according to an embodiment of the present invention.

Referring to FIG. 4A, a social relationship can be set up between an ISC device A 100A and an ISC device B 100B participating in the social service session provided by a server 10. The ISC device A 100A and the ISC device B 100 belong to the server 10 of the same domain. Accordingly, the social relationship is established in this single domain. The server 10 includes the ISC server 120, the ISC XDMS 140, and a message server 150 (or the supporting server 150 of FIG. 1).

Referring to FIG. 4B, a social relationship can be set up between the ISC device A 100A and the ISC device B 100B participating in the social service session provided by the server A 10A and the server B10B, respectively. The ISC device A 100A and the ISC device B 100B belong to the server A 10A and the server B 10B of different domains. The server 10A and the server B 10B can be connected via the ISC CP gateway 130. Accordingly, the social relationship is established between the different domains. The server A 10A or the server B 10B includes the ISC server 120, the ISC XDMS 140, and the message server 150 (or the supporting server 150 of FIG. 1).

In FIGs. 4A and 4B, the user of the ISC service is included in the new contacts group. By contrast, when the new contacts group does not include the user of the ISC service, the ISC server A 10A may convert the information about the contacts group and the social relationship setting to an appropriate message (e.g., Short Messaging Service (SMS), Multimedia Messaging Service (MMS), email, etc.) and send the message to a non-ISC service user.

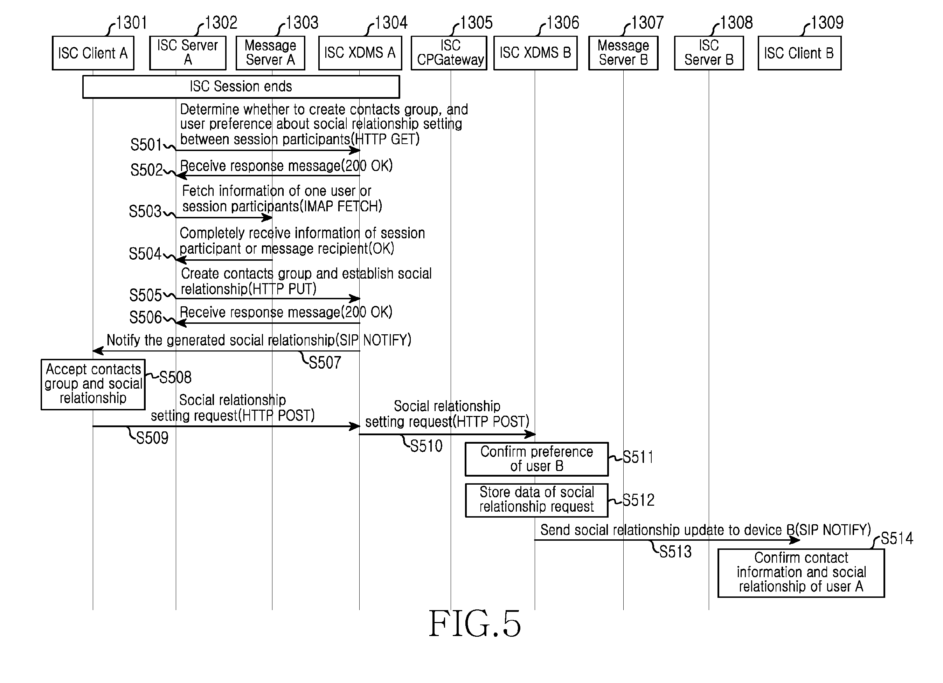

Social relationship settings according to embodiments of the present invention are explained in further detail as follows with reference to FIGs. 5 through 11. Herein, the social relationship is established between two users having a business meeting using conferencing, which is one of the ISC services.

FIG. 5 is a diagram illustrating a detailed process of the social relationship setting according to an embodiment of the present invention.

Referring to FIG. 5, after the ISC session ends, in step S501, the ISC server A determines whether to create a contacts group and user preferences about social relationship settings between the session participants based on conference related context (e.g., conference schedule/open information, participant information (allowed personal information, participation grade information, and major participation field information), and other conference information, via a Hypertext Transfer Protocol (HTTP) GET message. In addition, the ISC server A can obtain, if or when the ISC user defines the specific user preference about whether specific context requested by the user is included (e.g., whether the contacts group for a special participant of the business meeting is created).

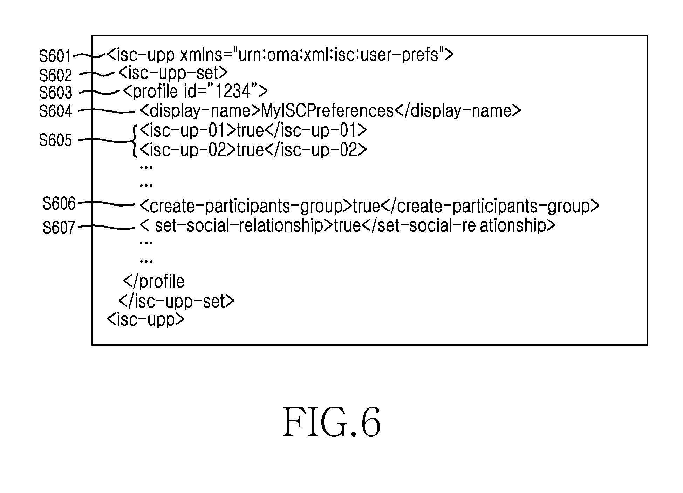

FIG. 6 is a diagram illustrating an ISC user preference document according to an embodiment of the present invention. This document can be stored in ISC User Preferences App. Usage in the ISC XDMS.

Referring to FIG. 6, the ISC user preference document includes an element <isc-upp-set> S602 under an element <isc-upp> S601, and an element <profile> S603 further below. Subelements of the element <profile> S603 also include <display-name> S604, <isc-up-01>, and <isc-up-02> S605. To define the user preference for the participant group creation of the participating ISC session and the user preference for the social relation setup with the participants, the ISC user can have an element <create-participants-group> S606 and an element <set-social-relationship> S607. The element <create-participants-group> S606 can have a subelement setting value as shown in Table 1, and the element <set-social-relationship> S607 can have a setting value as shown in Table 2.

**Table 1**

| |
|---|
| <create-participants-group> |
| 'true': creates a group of ISC session participants |
| 'false': does not create a group of ISC session participants |

**Table 2**

| |
|---|
| <set-social-relationship> |
| 'true': sets social relationship with ISC session participants |
| 'false': does not set social relationship with ISC session participants |

As shown in FIG. 6, the group of the session participants is created and the social relationship is established.

Referring back to FIG. 5, in step S502, the ISC server A receives a response message (e.g., 200 OK) from the ISC User Preference App. Usage of the ISC XDMS.

In step S503, the ISC server A fetches (Internet Messaging Application Protocol (IMAP)-fetches) information of one user (stand-alone user or 1-1 session participant) or the session participants (ad-hoc group participants or pre-defined group participants) from the message server A 1303 via a converged IP messaging message(CPMMSG) interface according to the preset user preference (IMAP FETCH).In step S504, the ISC server A completely receives the information of the session participant or a message recipient (or exchanger) from the message server A 1303, via an OK message. In so doing, to generate the group of a next step, the ISC server A needs to fetch the following information of Table 3 in step S503.

**Table 3**

| |
|---|
| A. SIP URI or TEL URI - URI of session participants |
| B. Display Name - name of session participants |
| C. Date - session or message exchange time |

Further, when the ISC server A optionally receives a title and a session time of the session participants, it can help to create the more accurate group.

In step S505, the ISC server A creates the contacts group in the ISC XDMS A 1304 or the Group XDMS and then establishes the social relationship based on the corresponding context (HTTP PUT). For example, the social relationship "oma NY meeting participants sponsor" can be set up.

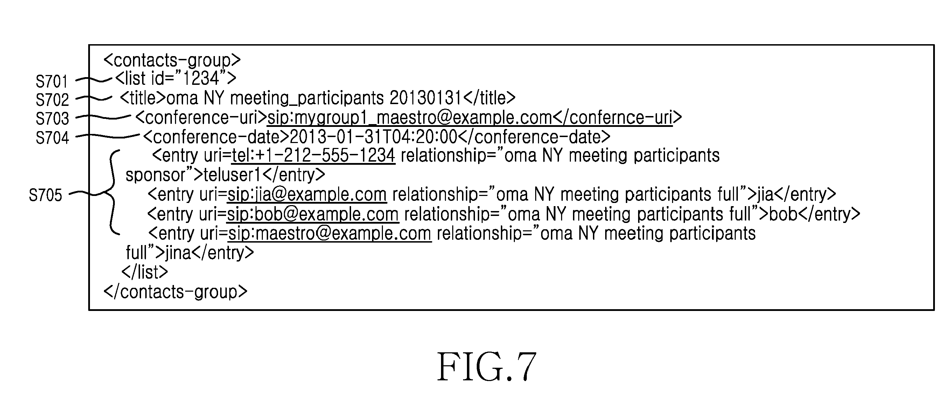

FIG. 7 is a diagram illustrating a contacts group for a session participant according to an embodiment of the present invention. The ISC server A can define a plurality of elements or attributes for the contacts group of the session participants.

Referring to FIG. 7, <list> S701 denotes a list of contacts groups. <title> S702 denotes a name of the contacts group. For example, the name of the contacts group can be "biz meeting 20130131". <conference-uri> S703 denotes a Uniform Resource Identifier (URI) of the conference of the session participant. For example, the <conference-uri> can be Conversation-ID or Contribution-ID. <conference-date> S704 denotes a session generation date. <entry> S705 denotes the session participant. For example, the <entry> can include the URI and the name of the session participant. For example, the <entry> can include information about a grade (e.g., sponsor, full, associate) and a company of the session participant.

The contacts group of FIG. 7 can be stored as the contacts group document in the Contacts Group Application Usage in the ISC XDMS. For example, according to the server, the contacts group may be appropriately stored in the group XDMS or a separate server, rather than the ISC XDMS.

Referring back to FIG. 5, in step S506, the ISC server A receives a response message (e.g., 200 OK) from the ISC XDMS.

In step S507, the ISC server A notifies the established social relationship (contacts group) to the ISC user A (SIP NOTIFY). For doing so, the ISC user A subscribes to the corresponding document in advance so as to receive the change of the contacts group (SIP SUBSCRIBE).

In step S508, the ISC user A accepts the contacts group and the social relationship. According to the preference, the ISC user can optionally accept the contacts group and the social relationship. In this case, the ISC user A sends a HTTP PUT message (e.g., 2013.06.25 Cocktail Mania) for storing the contacts group including the social relationship of the ISC server in the ISC XDMS A 1304.

In step S509, the ISC client A 1301generates and sends the social relationship setting request to the ISC XDMS A 1304, via an HTTP POST message.

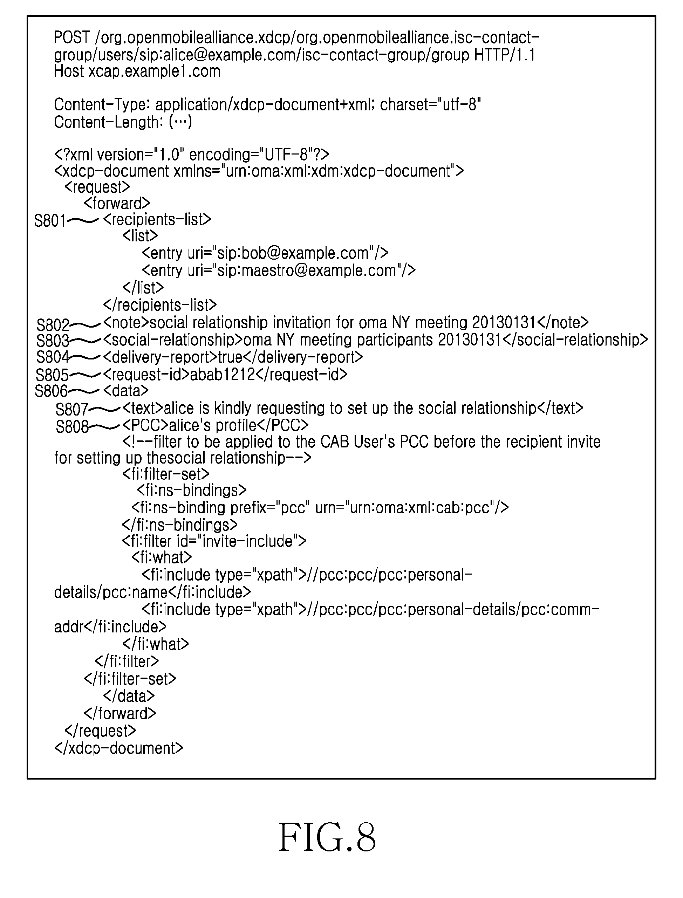

FIG. 8 is a diagram illustrating a social relationship setting request according to an embodiment of the present invention. FIG. 8 shows elements in a HTTP POST request for the social relationship setting request.

Referring to FIG. 8, <recipients-list> S801 indicates a recipient list. For example, <recipients-list> includes two users (bob, maestro). <note> S802 denotes an invitation to the social relationship setting. <social-relationship> S803 denotes that the sender invites the recipient to the social relationship. For example, the <social-relationship> can be 'oma NY meeting participants 20130131'. <delivery-report> S804 denotes a request to receive a result (e.g., true) of the social relationship setting request. <request-id> S805 denotes the ID of the social relationship setting request. <data> S806 denotes sender information for requesting the social relationship setting. <text> S807 denotes notification information about the social relationship setting request. <PCC> S808 denotes profile information of the sender for the social relationship setting request. <PCC> is Personal Contact Card (PCC) defined in Open Mobile Alliance (OMA) Converged Address Book (CAB), and delivered to the recipient.

In FIG. 8, the filter value is set through the filter ID of "invite-include". When the recipients store and try to subscribe to the personal information of the sender in response to the social relationship setting invitation, such a setting allows recipients to subscribe to or to read only part (e.g., name, comm-addr) of the personal information of the sender.

Referring back to FIG. 5, in step S510, the ISC XDMS A 1304 obtains the recipient information from the social relationship setting request message received in step S509 and determines whether the social relationship setting request message is for the single domain or different domains. The ISC XDMS A 1304 generates the social relationship setting request message (e.g., the HTTP POST message) corresponding to the determination result, and sends the generated message to an appropriate recipient domain. The HTTP POST message can include, not only the identifiable document URI information including the social relationship setting invitation request information or the social relationship setting invitation related information, but also the sender information. Thus, the recipient can obtain the profile information of the sender and then accept the social relationship request.

In step S511, the ISC XDMS B 1306 receiving the social relationship setting invitation request identifies the user preference about whether the ISC user B is notified of the contact and the corresponding social relationship of the ISC user A. At this time, the user preference can include Accept, Confirm, and Reject. Accept stores the received data in the server (e.g., the ISC XDMS or the group XDMS) for managing the contacts group and then receives server change notification. Confirm temporarily stores the received data in the server and then finally stores the received data in the server through the user authorization. Reject rejects the corresponding social relationship.

In step S512, the ISC XDMS B 1306 performs an appropriate operation according to the user preference of the ISC user B. For example, when the user preference is Accept, the ISC XDMS B 1306 stores the data of the received social relationship request in the ISC XDMS, or fetches the contact and social relationship information of the corresponding ISC user A from the sender-side ISC XDMS server A based on the document URI and stores the fetched information in the recipient-side ISC XDMS.

In step S513, the ISC XDMS B 1306 sends the update (or change) of the stored social relationship to the ISC user B via an SIP NOTIFY message.

In step S514, the ISC user B identifies the contact information and the social relationship of the added ISC user A and accepts the identified social relationship.

In FIG. 5, the new contacts group includes the user of the ISC service. When the new contacts group does not include the user of the ISC service, the ISC server A 1302 may convert the information about the contact information and the social relationship setting to the appropriate message (e.g., SMS, MMS, email) and send the message to the non-ISC service user.

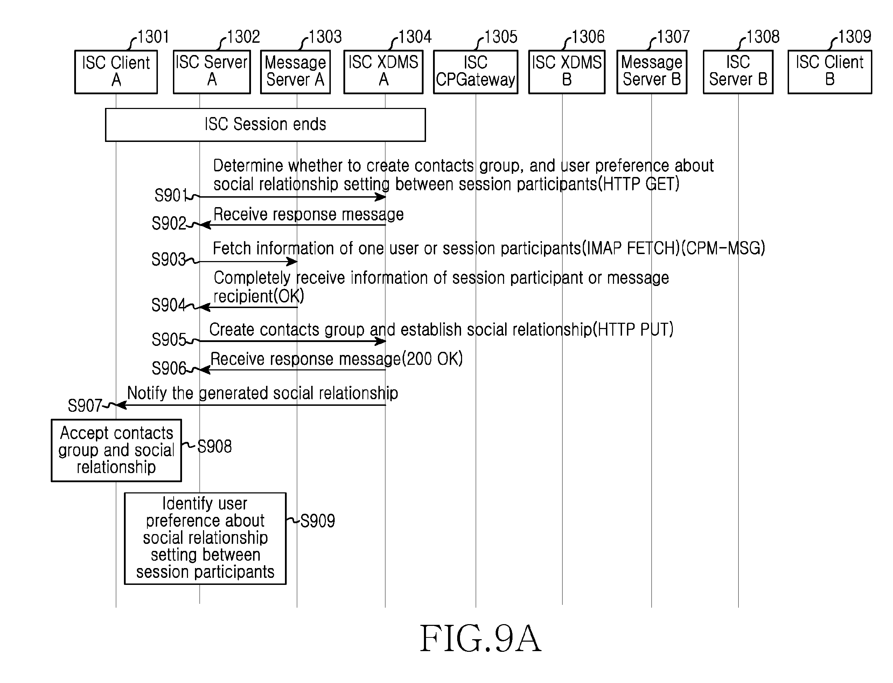

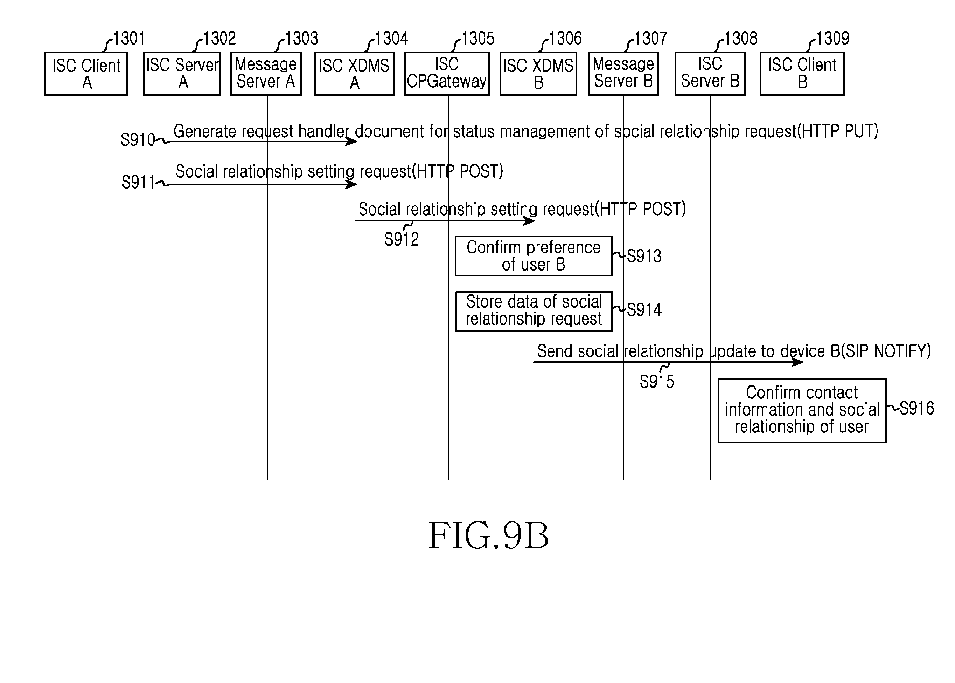

FIGs. 9A and 9B are diagrams illustrating a detailed process for establishing the social relationship according to yet another embodiment of the present invention. The ISC server establishes the social relationship based on the session context.

Referring to FIG. 9A, steps S901 through S908 are the same as steps S501 through S508 of FIG. 5, and therefore, a further description of these steps is omitted.

In step S909, the ISC server A 1302 identifies the user preference about the social relationship settings of the session participants. The ISC server A 1302 can obtain the specific user preference about whether a specific context requested by the user is included (e.g., whether the contacts group for a special participant of the business meeting is created), if or when the ISC user defines such a specific user preference.

Referring to FIG. 9B, in step S910, the ISC server A 1302 generates a request handler document for status management of the social relationship request in the ISC XDMS via an HTTP PUT message. When a delivery report is necessary, the corresponding value of the social relationship request is set to 'true'. When a response to the request has not yet been received, the value is set to 'pending'. Finally, when the ISC server A 1302 receives the response of the social relationship request, the ISC server A 1302 sets the status to 'pending'.

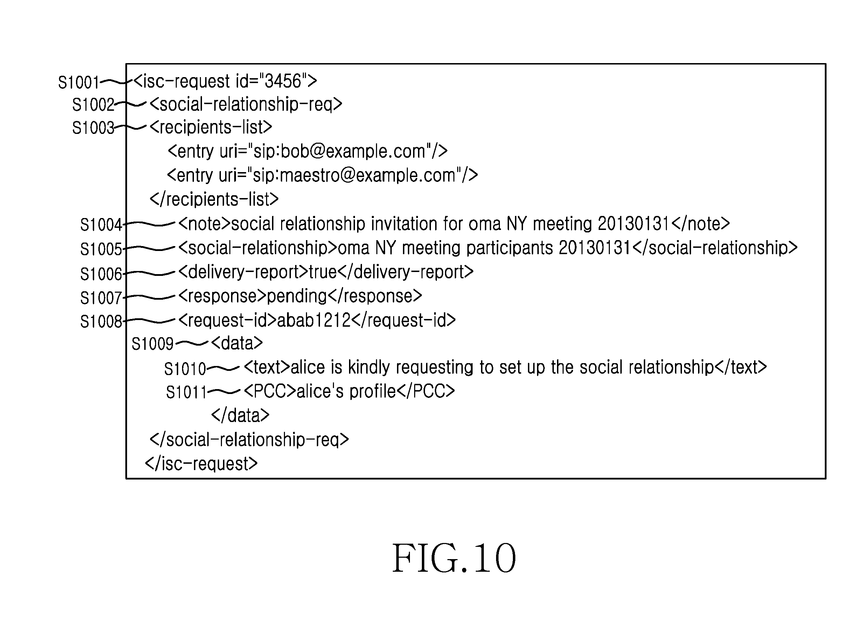

FIG. 10 is a diagram illustrating a request handler document for the status management of the social relationship setting request according to an embodiment of the present invention.

Referring to FIG. 10, <isc-request> S1001 in the request handler document denotes the ISC related request. <social-relationship-req> S1002 denotes the social relationship setting request. <recipients-list> S1003 denotes the recipient list. For example, <recipients-list> includes entries corresponding to two users (bob and maestro). <note> S1001 denotes the social relationship setting invitation. <social-relationship> S1005 denotes that the sender invites the recipient to the social relationship. For example, the <social-relationship> is 'oma NY meeting participants 20130131'. <delivery-report> S1006 denotes the result reception request (e.g., true) for the social relationship setting request. <response> S1007 denotes the response status of the recipient in response to the social relationship setting request. 'Pending' indicates that no response has been received. When the response is received, <response> S1007 is set to 'delivered'. <request-id> S1008 denotes the ID of the social relationship setting request. <data> S1009 indicates information of the sender that is requesting the social relationship setting. <text> S1010 denotes the notification information about the social relationship setting request. <PCC> S1011 denotes the profile information of the sender for the social relationship setting request.

Referring back to FIG. 9B, in step S911, the ISC server A 1302 sends, to the recipient, the social relationship request for the contact and the corresponding social relationship of the ISC user A by adding the new contact as the recipient via an HTTP POST message. In so doing, the data including the contact and the corresponding social relationship of the ISC user A may be contained in the social relationship request as it is, or as the identifiable document URI.

Steps S912 through S916 of FIG. 9B are the same as steps S510 through S514 of FIG. 5, and therefore, a further description of these steps is omitted for clarity and conciseness.

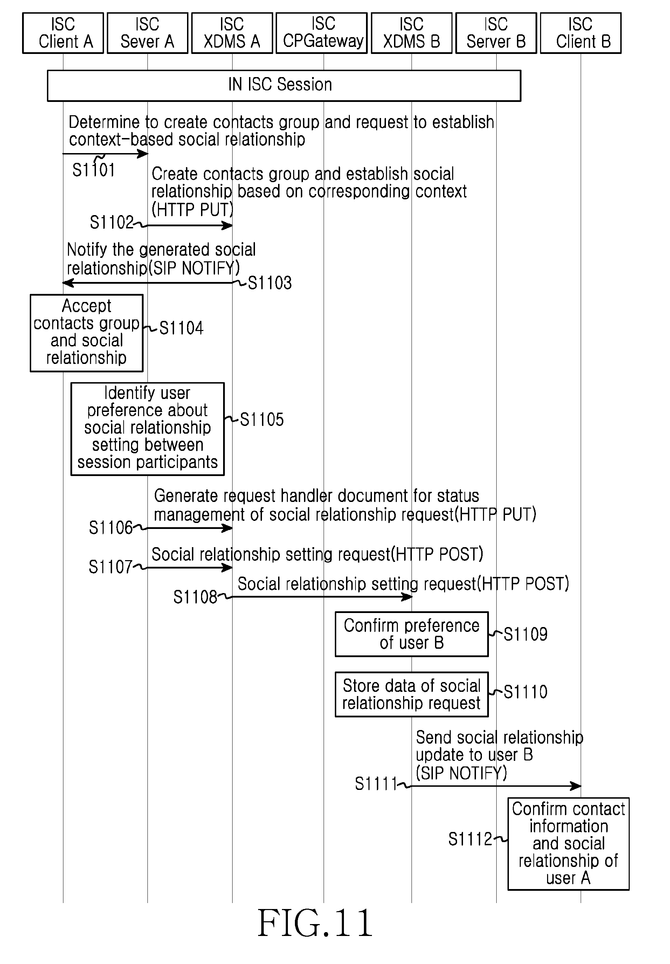

FIG. 11 is a diagram illustrating a detailed process for establishing a social relationship according to still another embodiment of the present invention. During the ISC service (e.g., during a business meeting through a conference), a social relationship is set up between two users.

Referring to FIG. 11, the ISC user A in the business meeting determines to create a contacts group based on a conference context, for example, based on the conference schedule/open information, the participant information (e.g., the allowed personal information, the participation grade information, and the major participation field information), and other conference information, and sends the context-based social relationship setting request to the ISC server A 1302, via an SIP MESSAGE or an HTTP PUT message according to the interface, in step S1101. The ISC user A may request the details about whether a specific context is included (e.g., whether the contacts group for the special participant in the business conference is created).

In step S1102, the ISC server A 1302 Internet Message Access Protocol (IMAP)-fetches the information of one user (stand-alone or 1-1 session) or the session participant (ad-hoc group or pre-defined group) from the message server A 1303 via the CPMMSG interface, creates the contacts group in the ISC XDMS A 1304 based on the fetched information, and sets up the social relationship based on the corresponding context (HTTP PUT), similarly to S503 and S504 of FIG. 5. For example, the social relationship "biz meeting 20111006 sponsor" can be established.

S1103 through S 1112 are the same as S907 through S916 of FIG. 9, and are not further described herein.

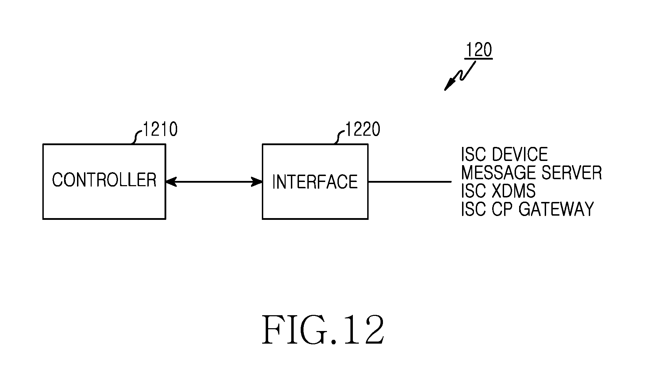

FIG. 12 is a block diagram illustrating an ISC server for establishing the social relationship according to an embodiment of the present invention.

Referring to FIG. 12, an ISC server 120 includes a controller 1210 and an interface 1220. The controller 1210 controls and processes the operations of the ISC server 120, and establishes social relationships. For example, the controller 120 can control the processes of FIGs. 5, 9, and 11. The interface 1220 interfaces with the ISC server 120 and the ISC device 100, the message server (or the supporting server) 150, the ISC XDMS 140, and the ISC CP gateway 130. The interface 1220 connects the ISC server 120 with the ISC device 100, the message server (or the supporting server) 150, the ISC XDMS 140, and the ISC CP gateway 130, and thus and establishes the social relationship.

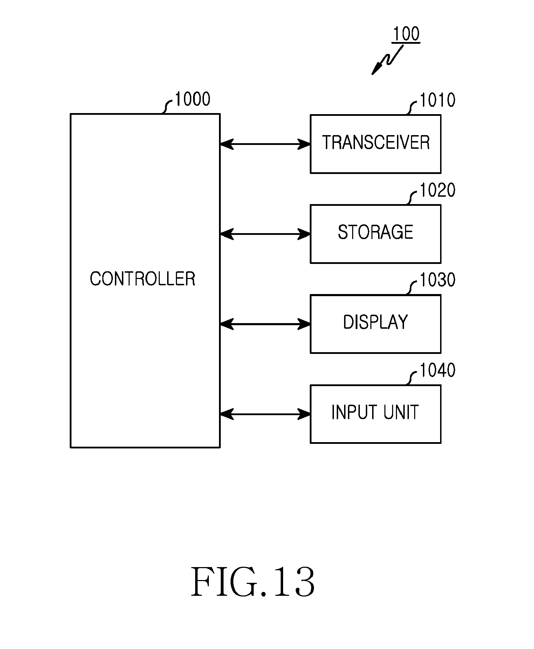

FIG. 13 is a block diagram illustrating an ISC device for establishing the social relationship according to an embodiment of the present invention.

Referring to FIG. 13, an ISC device 100 includes a controller 1000, a transceiver 1010, a display 1030, and an input unit 1040.

The controller 1000 controls and processes the operations of the ISC device 100. For example, the controller 1000 controls and processes ISC user registration, communication (e.g., chat message/file delivery) of the ISC users, a group-related function for viewing the contents together (e.g., add/delete a viewing participant), content viewing synchronization, user device capability discovery, content viewing information management, and media content reception/handling. In particular, the controller 1000 establishes social relationships. For example, the controller 1000 can control the processes of FIGs. 5, 9, and 11.

The transceiver 1010 communicates with the ISC server 120 under a control of the controller 1000. For example, the transceiver 1010 controls and processes to receive the contents from the ISC server 120.

The storage 1020 stores various data and programs for the operations of the ISC user device 100. The storage 1020 stores the data generating during the function corresponding to the program executed by the controller 1000.

The display 1030 includes at least one software component for providing a graphical user interface between the user and the ISC user device 100. For example, the display 1030 generates and displays an interface for the social relationship setting in a screen.

The input unit 1040 can include at least one of a touch sensor, digit keys, character keys, and function keys. With the touch sensor, the input unit 1040 can detect the touch (or the contact) through the touch sensor (not shown) and send the detected touch input to the controller 1000.With the digit keys and/or character keys, the input unit 1040 can provide data indicating the key input by the user to the controller 1000. For example, the input unit 1040 provides the input relating to the social relationship setting to the controller 1000.

As set forth above, the ISC user establishes a social relationship based on a session context relating to a participation session, thereby providing ISC functions to the user.

The above-described operations according to embodiments of the present invention can be fulfilled by the single controller. Program instructions executable by various computers can be recorded in a computer-readable recording medium. The computer-readable recording medium can include a program instruction, a data file, and a data structure alone or in combination. The program instruction can be specially designed for the present disclosure or well-known to those skilled in computer software. Examples of a computer-readable recording medium include magnetic media such as hard disk, floppy disk and magnetic tape, optical media such as Compact Disc Read Only Memory (CD-ROM) and Digital Versatile Disc (DVD), magneto-optical media such as floptical disk, and hardware devices specifically configured to store and execute the program instruction such as Read Only Memory (ROM), Random Access Memory (RAM), and flash memory. The program instruction can include, not only machine code made by a complier, but also high-level language code executable by a computer using an interpreter. When all or part of a base station or a relay station is realized as a computer program, the computer-readable recording medium storing the computer program is also included within embodiments of the present invention.

While the present invention has been shown and described with reference to certain embodiments thereof, it will be understood by those skilled in the art that various changes in form and detail may be made therein without departing from the spirit and scope of the invention as defined by the appended claims and their equivalents.

## Claims

1. An operating method of a server in a communication system for providing a social service, the operating method comprising:
generating information about a contacts group for at least two participants of a social service chat or session and a social relationship of the participants;
providing the generated information to at least one of the participants; and
sending a social relationship setting request to at least one other participant of the at least two participants excluding the at least one of the participants provided with the generated information.

2. The operating method of claim 1, wherein sending the social relationship setting request to the at least one other participant comprises:
sending the social relationship setting request to the at least one other participant in response to a social relationship setting request received from the at least one participant provided with the generated information.

3. The operating method of claim 1, wherein the information is generated after the social service session ends or during the social service session in response to a request from the at least one participant provided with the generated information.

4. The operating method of claim 1, wherein generating the information comprises:
generating the information about the contacts group of the at least two participants and the social relationship of the at least two participants based on preference of preset participants.

5. The operating method of claim 1, wherein the information comprises at least one of a list of the contacts group, a name of the contacts group, a Uniform Resource Identifier (URI) of the session, a session generation date, and a participant of the session.

6. The operating method of claim 1, further comprising:
identifying the at least one other participant; and
sending the generated information to the identified at least one other participant.

7. The operating method of claim 6, wherein identifying the at least one other participant comprises:
identifying the at least one other participant to send the generated information based on preference of preset participants.

8. The operating method of claim 6, further comprising:
updating, after identifying the at least one other participant, a request handler document for managing a status of the social relationship request.

9. The operating method of claim 8, wherein the request handler document comprises at least one of a social service related request, a social relationship setting request, a recipient list, a social relationship setting invitation, a social relationship invitation from a sender to the recipient, a result reception request for the social relationship setting request, a response status of the recipient for the social relationship setting request, an identifier of the social relationship setting request, sender information for the social relationship setting request, notification information for the social relationship setting request, and profile information of the sender for the social relationship setting request.

10. The operating method of claim 1, wherein the social relationship setting request comprises at least one of a recipient list, a social relationship setting invitation, a social relationship invitation from a sender to the recipient, a result reception request for the social relationship setting request, an identifier of the social relationship setting request, sender information for the social relationship setting request, notification information for the social relationship setting request, and profile information of the sender for the social relationship setting request.

11. The operating method of claim 1, wherein the other participant belongs to a server of the same domain as the at least one participant.

12. The operating method of claim 1, wherein the other participant belongs to a server of the different domain from the at least one participant.

13. An apparatus arranged to implement a method of one of claims 1 to 12.
